# EUROPÄISCHE PATENTSCHRIFT

(11) **EP 3 317 143 B1**
(45) Veröffentlichungstag und Bekanntmachung des Hinweises auf die Patenterteilung: **22.06.2022**
(21) Anmeldenummer: 16735632.8
(22) Anmeldetag: 01.07.2016
(51) Int. Cl.: B60N 2/809, B60N 2/70

(54) **KOPFSTÜTZENKÖRPER UND KOPFSTÜTZE**
HEADREST BODY AND HEADREST
CORPS D'APPUIE-TÊTE ET APPUIE-TÊTE

(30) Priorität: 03.07.2015 DE 102015212510
(43) Veröffentlichungstag der Anmeldung: 09.05.2018
(73) Patentinhaber: Adient US LLC, Plymouth, MI 48170 (US)
(72) Erfinder: DILLINGER, Thomas, 40880 Ratingen (DE)
(74) Vertreter: Liedtke & Partner Patentanwälte
(86) Internationale Anmeldenummer: PCT/EP2016/065599
(87) Internationale Veröffentlichungsnummer: WO 2017/005660

(56) Entgegenhaltungen:
- EP-A2- 1 097 837
- EP-A2- 1 752 334
- WO-A2-2009/014329
- WO-A2-2013/004696
- JP-A- 2003 327 032
- US-A1- 2013 313 881

## Beschreibung

Die Erfindung betrifft einen Kopfstützenkörper für eine Kopfstütze, eine Kopfstützenhalterung und eine Kopfstütze.

Aus dem Stand der Technik sind allgemein Kopfstützen für Fahrzeuge bekannt, bei welchen zwischen einem äußeren Bezug und einem inneren Verbindungsteil zur Anbindung der Kopfstütze an eine Kopfstützenhalterung ein Füllmaterial in Form eines Schaums angeordnet ist. Bei bekannten Kopfstützen ist es dabei beispielsweise vorgesehen, dass ein vorgeformter Schaumkörper zur Füllung des Kopfstützenkörpers verwendet wird.

Eine derartige Kopfstütze für ein Fahrzeug offenbart die DE 10 2005 015 292 B3. Die Kopfstütze umfasst einen Kopfstützenkörper und eine Kopfstützenhalterung, wobei an der Außenseite des Kopfstützenkörpers ein Bezug vorgesehen ist. Innerhalb des Kopfstützenkörpers ist ein Verbindungsteil zur Verbindung der Kopfstützenhalterung mit dem Kopfstützenkörper vorgesehen, wobei zwischen dem Verbindungsteil und dem Bezug ein aus Schaum gebildetes Füllmaterial angeordnet ist. Das Füllmaterial ist in seinem Verarbeitungszustand flüssig ausgebildet, wobei bezüglich des Füllmaterials in seinem Verarbeitungszustand das Verbindungsteil und der Bezug einen im Wesentlichen dichten Raumbereich definieren. Weiterhin wird ein Verfahren zur Herstellung der Kopfstütze beschrieben.

Aus der WO 2013/004696 A2 sowie JP 2003327032 A sind Kopfstützen mit flexiblen Auflageflächen bekannt.

Der vorliegenden Erfindung liegt die Aufgabe zugrunde, einen gegenüber dem Stand der Technik vereinfachten und kostengünstigen Kopfstützenkörper sowie eine verbesserte Kopfstützenhalterung und eine Kopfstütze anzugeben.

Die Aufgabe wird erfindungsgemäß mit einem Kopfstützenkörper gemäß den Merkmalen des Patentanspruchs 1 gelöst. Hinsichtlich der Kopfstütze wird die Aufgabe erfindungsgemäß durch die im Patentanspruch 11 angegebenen Merkmale gelöst.

Weiterbildungen der Erfindung sind Gegenstand der Unteransprüche.

Der erfindungsgemäße Kopfstützenkörper für eine Kopfstütze ist als mindestens ein Rahmen mit einem oder mehreren innen liegenden, eine Auflagefläche bildenden flexiblen Auflageelementen ausgebildet und durch Urformen aus einem Kunststoffmaterial, insbesondere aus einem Werkstoff frei von aufgeschäumten Materialien, oder aus einem Verbundwerkstoff, insbesondere aus einem Faserverbundwerkstoff, zum Beispiel glasfaser- oder kohlenstofffaserverstärktem Kunststoff, gebildet.

Das Kunststoffmaterial ist insbesondere ein thermoplastischer Kunststoff, zum Beispiel Polypropylen, Polyethylen, Polycarbonate-Acrylnitril-Butadien-Styrol (PC-ABS).

Der Kopfstützenkörper ist einteilig ausgebildet. In diesem Ausführungsbeispiel sind der Rahmen und die flexiblen Auflageelemente gemeinsam durch Urformen aus einem Kunststoffmaterial gebildet.

Ein solcher Kopfstützenkörper ist kostengünstig herstellbar und weist auch ohne die Verwendung aufgeschäumter Materialien (schaumlos) gute Dämpfungs- und Auflageeigenschaften auf. Dabei wird insbesondere vollständig auf die Verwendung aufgeschäumter Materialien verzichtet. Beispielsweise ist der Kopfstützenkörper aus einem schlagzähen elastoplastischen oder thermoplastischen Werkstoff, zum Beispiel einem thermoplastischen Kunststoff, insbesondere aus Polypropylen, Urethan, Polyurethan, Polyethylen oder Polycarbonate-Acrylnitril-Butadien-Styrol (PC-ABS), gebildet. In einer möglichen Ausführungsform wird der Kopfstützenkörper durch Spritzgießen eines Werkstoffs frei von aufgeschäumten Kunststoffmaterialien oder durch Mehrkomponentenspritzen aus mehreren Kunststoffmaterialien gebildet. Alternativ kann der Kopfstützenkörper auch durch Umformen, insbesondere Pressen oder Stanzpressen, gebildet werden.

In einer möglichen Ausführungsform bildet/n das oder die Auflageelement/e eine ergonomisch ausgestaltete Auflagefläche des Kopfstützenkörpers (auch Kopfanlagefläche genannt). Insbesondere bildet/n das oder die Auflageelemente eine konkav geformte Auflagefläche. Dabei ist die Auflagefläche derart konkav geformt, dass diese eine gegenüber herkömmlichen Kopfstützenkörpern größere Auflagefläche aufweist. Insbesondere ermöglicht der Kopfstützenkörper mit einer konkav geformten Auflagefläche in Kombination mit dem Rahmen, dass ein Kopf, insbesondere der Hinterkopf auf der Auflagefläche aufliegt und und seitlich davon vom Rahmen gestützt ist.

Hierzu ist oder sind das bzw. die Auflageelemente in Auflagerichtung ergonomisch geformt und ausgestaltet, insbesondere an einen Kopf angepasst, so dass eine komfortable Auflage und Positionierung für einen Kopf und insbesondere eine den Kopf stabilisierende geringe seitliche An- und Auflagefläche ermöglicht ist. Mit anderen Worten: Das oder die Auflageelemente selbst sind ergonomisch ausgeformt, um die ergonomisch ausgestaltete Auflagefläche zu bilden. Aufgrund der ergonomischen Ausformung des oder der Auflageelemente kann der Kopfstützenkörper schaumlos ausgebildet sein. Lediglich das oder die Auflageelement/e kann oder können mit einer Polsterung versehen sein.

Aufgrund der ergonomisch, insbesondere konkav geformten Auflagefläche kann die Polsterung auch entfallen. Ein solcher Kopfstützenkörper weist somit eine konkav geformte und polsterfreie Auflagefläche auf.

Alternativ kann die Auflagefläche gegenüber bekannten Kopfstützenkörpern eine wesentlich geringere Polsterung aufweisen. Üblicherweise ist ein Kopfstützenkörper mit einer Polsterung von ca. 25 mm versehen. Der Kopfstützenkörper, insbesondere das oder die Auflageelemente sind in einer möglichen Ausführungsform bei entsprechend konkav geformter Auflagefläche mit einer Polsterung von kleiner 20 mm, insbesondere kleiner 15 mm, bevorzugt mit einer Polsterung in einem Bereich von 10 mm bis 5 mm versehen.

Gegenüber herkömmlichen Kopfstützenkörpern führt der polsterfreie Kopfstützenkörper oder der eine geringere Polsterung aufweisende Kopfstützenkörper im Fall eines Heckaufpralls zu einer deutlich geringeren Kopfbewegung. Somit ist mittels des Kopfstützenkörpers sowohl der Komfort als auch die Sicherheit erhöht, da die Auflagefläche selbst einen Kopfaufprall bei einem Heckaufprall begrenzt.

Eine Ausführungsform der Erfindung sieht vor, dass die Auflageelemente als Rippen ausgebildet sind. Beispielsweise sind die Auflageelemente als Querrippen ausgebildet, die sich zwischen zwei Längsseiten des Rahmens erstrecken. Dabei sind die Querrippen im Innenraum des Rahmens angeordnet und bilden einen Zentralbereich und die Auflagefläche des Kopfstützenkörpers. Die Querrippen können in Längsausrichtung geradlinig oder abgewinkelt oder wellenförmig ausgebildet sein. Im Querschnitt weisen die Querrippen eine runde oder ovale oder flache Form auf.

Eine alternative Ausführungsform der Erfindung sieht vor, dass die Auflageelemente als Längsrippen ausgebildet sind, die sich zwischen zwei Querseiten des Rahmens erstrecken. Dabei sind die Längsrippen im Innenraum des Rahmens angeordnet und bilden einen Zentralbereich und die Auflagefläche des Kopfstützenkörpers. Die Längsrippen können in Längsausrichtung geradlinig oder abgewinkelt oder wellenförmig ausgebildet sein. Im Querschnitt weisen die Längsrippen eine runde oder ovale oder flache Form auf.

Eine weitere alternative Ausführungsform sieht vor, dass das Auflageelement als ein Netz von Quer- und Längsrippen ausgebildet ist.

Gemäß einer weiteren alternativen Ausführungsform sind die Auflageelemente als Einzelauflagen ausgebildet, die sich vom Rahmen weg erstrecken. Die Einzelauflagen sind beispielsweise als Pads aus einem oder mehreren verschiedenen Materialien ausgebildet. Beispielsweise ist der die Auflagefläche bildende Bereich des Pads gepolstert oder mit einem Polster versehen. Darüber hinaus ist oder sind das bzw. die als Einzelauflage/n ausgebildete/n Auflageelement/e flexibel gelagert. Beispielsweise sind die Auflageelemente am Rahmen mittels elastisch verformbaren Verbindungen befestigt, die eine ergonomische Anpassung der Auflagefläche ermöglichen. Insbesondere kann oder können das bzw. die Auflageelement/e derart positioniert werden, dass diese/s eine ergonomisch ausgestaltete Auflagefläche bildet/n. Zusätzlich oder alternativ kann/können die Einzelauflage/n selbst ergonomisch geformt ausgebildet sein, um eine entsprechend ergonomisch ausgestaltete Auflagefläche zu bilden.

Gemäß einer weiteren Ausführungsform weist der Kopfstützenkörper im Querschnitt eine konkave Form auf. Beispielsweise ist die Auflagefläche und damit der Zentralbereich des Kopfstützenkörpers nach innen gewölbt und in Art eines Sattels ausgebildet, so dass eine zum am Kopfstützenkörper anliegenden Kopf korrespondierende Form gebildet ist. Gemäß einer Weiterbildung weist der Rahmen im Querschnitt eine Profilierung, insbesondere eine S- oder Mäander-Form, ein oder mehrere Einkerbungen oder Nuten auf. Hierdurch weist der Rahmen eine hinreichende Festigkeit und Biegesteifigkeit auf. Der Rahmen ist beispielsweise ein Außenrahmen. Darüber hinaus kann der Rahmen die Auflagefläche vollständig umlaufend ausgebildet sein.

Zur Befestigung des Kopfstützenkörpers beispielsweise an einem Strukturelement, wie einer Sitzlehnenstruktur oder einer Karosseriestruktur, ragt vom Rahmen des Kopfstützenkörpers mindestens eine Kopfstützenhalterung ab, die einteilig ausgebildet ist.

Der Träger ist im Querschnitt profiliert ausgebildet. In einer möglichen Ausführungsform ist der zumindest eine Träger im Querschnitt S- oder mäanderförmig ausgebildet. Der Träger ist besonders einfach als ein rollgeformtes Profil, insbesondere Metallprofil ohne zusätzliche Beschichtung herstellbar.

Darüber hinaus ist die Kopfstützenhalterung und gegebenenfalls der Träger jeweils in Längsausdehnung zumindest einmal abgewinkelt. Dabei ist das jeweilige körperseitig abgewinkelte Ende der Kopfstützenhalterung und des Trägers am Kopfstützenkörper angeformt bzw. im Kopfstützenkörper fixiert, insbesondere lösbar fixiert. Das jeweils gegenüberliegende und strukturseitige abgewinkelte Ende der Kopfstützenhalterung und gegebenenfalls des Trägers ist in dem Strukturelement, insbesondere in einer Sitzlehnenstruktur oder Karosseriestruktur, lösbar fixiert. Beispielsweise ist der Träger form- und/oder kraftschlüssig, beispielsweise mittels einer Press-Fit- oder Form-Fit-Verbindung, im Kopfstützenkörper, insbesondere in der Kopfstützenhalterung, lösbar fixiert. Die Kopfstützenhalterung und gegebenenfalls der Träger, zum Beispiel Haltestange/n, sind dabei mit gleichem Winkel derart abgewinkelt, dass der Kopfstützenkörper im zusammengebauten Zustand in einer ergonomisch entsprechenden Position zu einem Kopf eines Benutzers angeordnet ist.

Die erfindungsgemäße Kopfstütze umfasst den zuvor beschriebenen Kopfstützenkörper und die zuvor beschriebene Kopfstützenhalterung, wobei ein Verbindungsteil zur Verbindung des Kopfstützenkörpers mit einem Strukturelement, insbesondere einer Sitzstruktur, einer Lehnenstruktur, einer Karosseriestruktur, vorgesehen ist. Insbesondere ist die Kopfstützenhalterung mit einer Strukturhalterung mittels einer Stift- oder Bolzenverbindung lösbar verbunden.

Eine weitere Ausführungsform sieht vor, dass zusätzlich eine Höheneinstellvorrichtung vorgesehen ist. Dadurch ist eine Höhe der Kopfstütze einstellbar. Ein Vorteil dieser Ausführungsform ist beispielsweise eine Anpassung an die Kopfhöhe einer Person, wodurch die Komfortabilität und eine Kraftübertragung und -ableitung im Falle eines Zusammenstoßes verbessert sind.

Die mit der Erfindung erzielten Vorteile bestehen insbesondere darin, dass eine besonders einfach herstellbare und kostengünstige Kopfstütze ermöglicht ist bei gleichzeitig verbesserten Stützkomfort und Kopfstützen-Design. Die Kopfstütze eignet sich nicht nur zur Anwendung im Automotivbereich, sondern auch im Transportwesen oder an anderen Einrichtungsgegenständen, wie Mobiliar.

Ausführungsbeispiele der Erfindung werden anhand von Zeichnungen näher erläutert. Dabei zeigen:
- Figuren 1A, 1B: schematisch in Draufsicht und im Längsschnitt ein Ausführungsbeispiel für einen Kopfstützenkörper,
- Figuren 2A, 2B: schematisch in Draufsicht und im Längsschnitt ein weiteres Ausführungsbeispiel für einen Kopfstützenkörper,
- Figuren 3A bis 3C: schematisch verschiedene Schnittansichten des Kopfstützenkörpers nach Figur 1A oder 2A,
- Figur 3D: schematisch eine Schnittansicht eines Kopfstützenkörpers mit Kerbe zwischen Rahmen und seitlicher Abstützung,
- Figuren 4A bis 4D: schematisch in Draufsicht verschiedene Ausführungsbeispiele für Kopfstützenkörper mit Rippen,
- Figuren 5A bis 5F: schematisch in Draufsicht weitere verschiedene Ausführungsbeispiele für Kopfstützenkörper mit Pads,
- Figuren 6A, 6B: schematisch in perspektivischer Ansicht und Explosionsdarstellung ein weiteres Ausführungsbeispiel für einen Kopfstützenkörper,
- Figuren 7A bis 7C: schematisch im Schnitt und Seitenansichten ein Ausführungsbeispiel für eine Kopfstützenhalterung,
- Figuren 8A, 8B: schematisch in Explosionsdarstellung ein Ausführungsbeispiel für einen Kopfstützenkörper mit angeformter Kopfstützenhalterung mit fixierbarem Träger und für einen Kopfstützenkörper mit angeformter trägerlosen Kopfstützenhalterung,
- Figur 9: schematisch in perspektivischer Ansicht eine an einer Strukturhalterung befestigte Kopfstütze,
- Figur 10: schematisch in perspektivischer Ansicht ein Ausführungsbeispiel für eine Strukturhalterung,
- Figuren 11A bis 11C: schematisch in Seitenansicht und in Schnittdarstellungen die in der Strukturhalterung befestigte Kopfstützenhalterung,
- Figur 12: schematisch in perspektivischer Darstellung eine Sitzlehne mit an dieser angeordneten Kopfstütze,
- Figur 13: schematisch in Seitenansicht die Sitzlehne gemäß Figur 12,
- Figuren 14A, 14B: schematisch in Seitenansicht eine Kopfstütze mit Höheneinstellvorrichtung und
- Figur 15: schematisch eine Schnittdarstellung durch den Kopfstützenkörper.

Einander entsprechende Teile sind in allen Figuren mit den gleichen Bezugszeichen versehen.

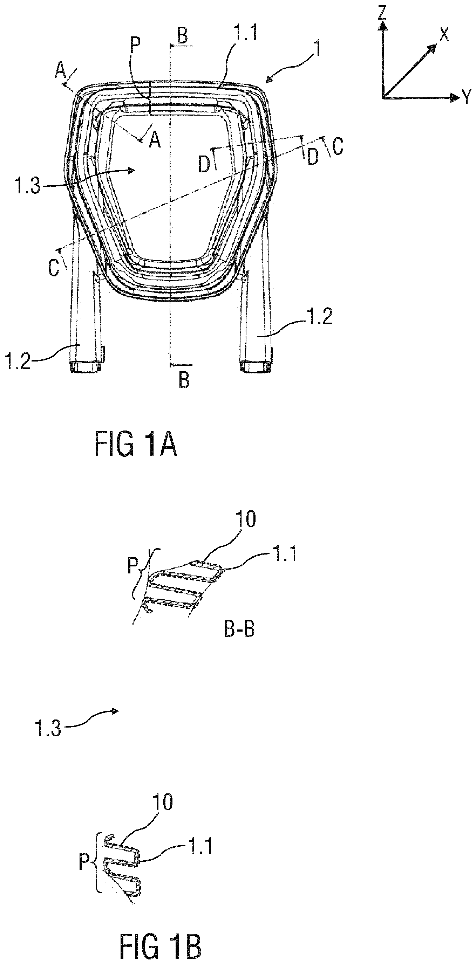

**Figur 1A** zeigt schematisch in Draufsicht ein Ausführungsbeispiel für einen Kopfstützenkörper 1.

Der Kopfstützenkörper 1 ist einstückig ausgebildet und umfasst mindestens einen Rahmen 1.1 und eine von diesem, insbesondere vertikal nach unten abragende Kopfstützenhalterung 1.2. Der einstückige Kopfstützenkörper 1 ist durch Urformen aus einem Kunststoffmaterial, insbesondere aus einem Werkstoff frei von aufgeschäumten Materialien, oder einem Verbundwerkstoff, insbesondere einem Faserverbundwerkstoff, wie einem glasfaserverstärkten Kunststoff, gebildet.

Der Rahmen 1.1 ist ein Außenrahmen.

Beispielsweise ist der Kopfstützenkörper 1 aus einem schlagzähen elastoplastischem oder thermoplastischen Werkstoff, zum Beispiel einem thermoplastischen Urethan, Polyurethan, Polypropylen gebildet. In einer möglichen Ausführungsform wird der Kopfstützenkörper 1 durch Spritzgießen eines Werkstoffs frei von aufgeschäumten Kunststoffmaterialien oder durch Mehrkomponentenspritzen aus mehreren Kunststoffmaterialien gebildet. Auch kann der Kopfstützenkörper 1 und die Kopfstützenhalterung 1.2 aus einem Faserverbundwerkstoff gebildet sein. Alternativ kann der Kopfstützenkörper auch durch Umformen, insbesondere Druckumformen, wie Gesenkformen, Pressen oder Stanzpressen, gebildet werden.

Der Rahmen 1.1 ist eine Auflagefläche 1.3 umlaufend ausgebildet und weist zwei Längsseiten und zwei Querseiten auf. Dabei ist in Draufsicht die obere Querseite breiter als die untere Querseite. Die zwei Längsseiten sind spiegelsymmetrisch ausgebildet und in Längsausdehnung nach innen abgewinkelt.

Der Rahmen 1.1 weist umlaufend eine Profilierung P auf. Die Profilierung P des Rahmens 1.1 weist insbesondere eine Mäander- oder Schlingenform auf. Alternativ kann die Profilierung P eine S-Form aufweisen oder hohlförmig mit Versteifungen oder mit ein oder mehreren Einkerbungen oder Nuten versehen sein. Beispielhaft weist der Rahmen 1.1 eine konkave Form auf. Hierdurch weist der Rahmen 1.1 eine hinreichende Festigkeit und Biegesteifigkeit auf.

Der Kopfstützenkörper 1 weist eine in Z-Richtung Z lange Auflagefläche 1.3 auf, so dass der Kopfstützenkörper 1 für unterschiedliche Kopfhöhen angepasst und geeignet ist.

Die Auflagefläche 1.3 (auch Anlagefläche genannt) ist dabei ergonomisch geformt, so dass ein an- oder aufliegender Kopf in seiner Position stabilisiert ist. Zur Unterstützung einer solchen Stabilisierung des anliegenden Kopfes ist die Auflagefläche 1.3 konkav geformt.

Im eingebauten Zustand des Kopfstützenkörpers 1 ist dessen höchste Position bei etwa 830 mm oder dessen niedrigste Position bei größer 780 mm über den sogenannten Hüftpunkt (H-Punkt = Punkt auf der Medianebene des Menschen, der im theoretischen Schnittpunkt der Torsoachse und der auf die Ebene projizierten Oberschenkellängsachse liegt). Die Mindesthöhe des Kopfstützenkörpers 1 beträgt 112 mm bei einer verstellbaren Kopfstütze bei einer beispielsweise maximalen Verstellung von 50 mm und 182 mm bei einer nichtverstellbaren Kopfstütze.

Der Kopfstützenkörper 1 ist dabei derart ausgelegt, dass bei einer Krafteinwirkung von 50 N der Kopfstützenkörper 1 in X-Richtung X und Z-Richtung Z in etwa 15 mm bewegt wird und die Position eines auf-/ anliegenden Kopfes in etwa beibehalten wird. Darüber hinaus weist der Kopfstützenkörper 1 bei einer Krafteinwirkung in einem Bereich von 900 N bis 1100 N eine Verformung von größer 7.5 mm, insbesondere bei einer Krafteinwirkung von 990 N eine Verformung von etwa 8 mm und bei einer Krafteinwirkung von 1068 N eine Verformung von etwa 9.6 mm, auf. **Figur 1B** zeigt den Kopfstützenkörper 1 gemäß Figur 1A im Längsschnitt. Die Profilierung P des Rahmens 1.1 weist im Ausführungsbeispiel zumindest abschnittsweise eine Mäander- oder Schlingenform auf. Alternativ kann die Profilierung P eine S-Form aufweisen oder hohlförmig mit Versteifungen oder mit ein oder mehreren Einkerbungen oder Nuten versehen sein. Durch diese Einkerbungen oder Nuten entsteht eine Rippenausformung. Hierdurch weist der Rahmen 1.1 eine hinreichende Festigkeit und Biegesteifigkeit auf.

Der vom Rahmen 1.1 umgebende Innenbereich des Kopfstützenkörpers 1 bildet die Auflagefläche 1.3. Die Auflagefläche 1.3 kann, wie nachfolgend beschrieben, verschiedenartig ausgebildet sein.

Optional kann der Kopfstützenkörper 1 mit einer Polsterung 10 versehen sein. Die Polsterung 10 weist insbesondere eine Dicke von kleiner 20 mm, insbesondere kleiner 15 mm auf. Alternativ kann die Polsterung 10 eine Dicke von 5 mm bis 10 mm aufweisen. Ein solcher polsterfreie Kopfstützenkörper 1 bzw. ein solcher Kopfstützenkörper 1 mit geringer Polsterung 10 von kleiner 20 mm weist einen hohen Komfort bei gleichzeitig hoher Sicherheit mit seitlicher Lagerung des Kopfes auf.

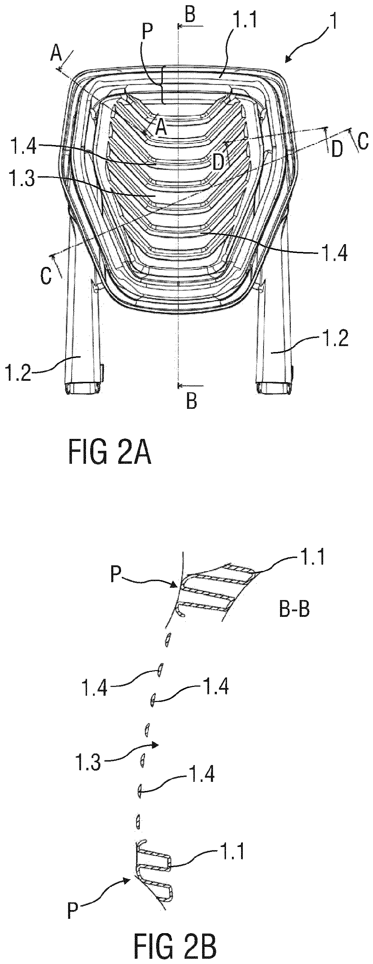

Die optionale dünne Polsterung 10 ist beispielhaft in Figur 2A gezeigt, kann aber auch bei allen nachfolgenden Ausführungsformen eingesetzt werden. Sie kann aber auch entfallen, so dass der Kopfstützenkörper 1 einteilig und polsterfrei ausgebildet ist.

**Figuren 2A und 2B** zeigen schematisch in Draufsicht und im Längsschnitt ein Ausführungsbeispiel für einen Kopfstützenkörper 1 mit mehreren innen liegenden, die Auflagefläche 1.3 bildenden flexiblen Auflageelementen 1.4.

Der Kopfstützenkörper 1 ist dabei mit dem Rahmen 1.1, der Kopfstützenhalterung 1.2 und den Auflageelementen 1.4 als ein einstückiges, spritzgegossenes Bauteil aus einem schaum losen Werkstoff oder einem Verbundwerkstoff ausgeführt.

Die Auflageelemente 1.4 erstrecken sich zwischen den zwei Längsseiten des Rahmens 1.1 und bilden die Auflagefläche 1.3 des Kopfstützenkörpers 1. Die Auflageelemente 1.4 sind als Querrippen ausgebildet.

Im gezeigten Ausführungsbeispiel weisen die Auflageelemente 1.4 einen mittleren geraden Bereich und davon zwei abgewinkelte Endbereiche auf, die mit dem Rahmen 1.1 verbunden sind. Die Auflageelemente 1.4 weisen somit eine U-Form auf.

**Figur 2B** zeigt im Längsschnitt die Profilierung P des Rahmens 1.1 gemäß Figur 2A, der analog zum Rahmen 1.1 der Figur 1A ausgebildet ist. Im Bereich der Auflagefläche 1.3 sind die Auflageelemente 1.4 angeordnet. Wie im Schnitt dargestellt, weisen die als Rippen ausgebildeten Auflageelemente 1.4 eine im Wesentlichen ovale oder leicht nach außen gewölbte Querschnittsform auf. Dies erhöht den Auflagekomfort und die Stabilisierung des Kopfes.

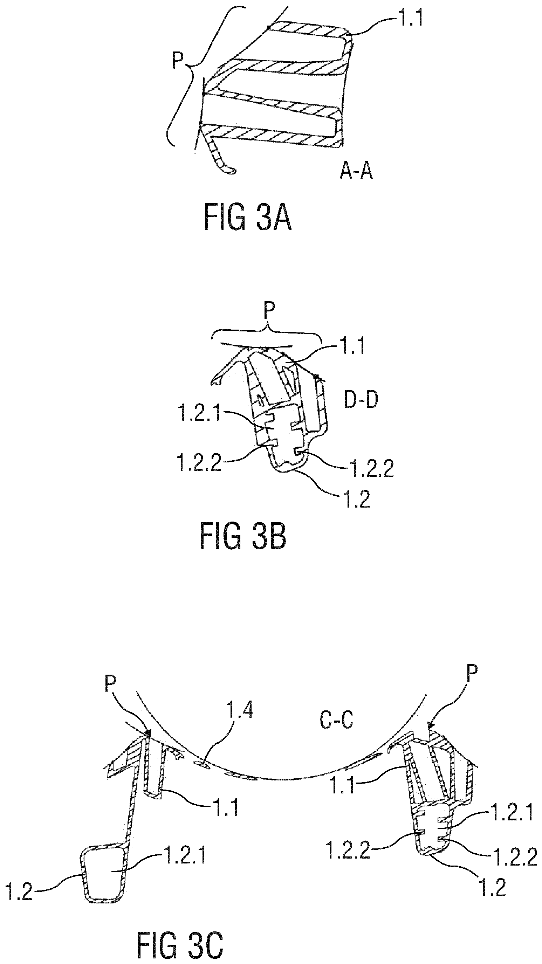

**Figuren 3A bis 3C** zeigen schematisch verschiedene Schnittansichten des Kopfstützenkörpers 1 nach Figur 1A oder 2A.

So zeigt **Figur 3A** einen Schnitt A-A durch einen Abschnitt des Rahmens 1.1 mit einer mäander- oder schlingenförmigen Profilierung P im Bereich zwischen der oberen Querseite und einer der Längsseiten des Rahmens 1.1.

**Figur 3B** zeigt einen Schnitt D-D durch einen Abschnitt des Rahmens 1.1 und die Kopfstützenhalterung 1.2. Die Profilierung P des Rahmens 1.1 ist in diesem Abschnitt hohlförmig und U-förmig ausgebildet.

Am von der Auflagefläche 1.3 wegweisenden Ende des Rahmens 1.1 schließt sich in diesem Abschnitt ein körperseitiges Ende der Kopfstützenhalterung 1.2 an. Das körperseitige Ende der Kopfstützenhalterung 1.2 ist hohlförmig ausgebildet und mit nach innen in einen Hohlraum 1.2.1 ragenden Stegen 1.2.2 versehen.

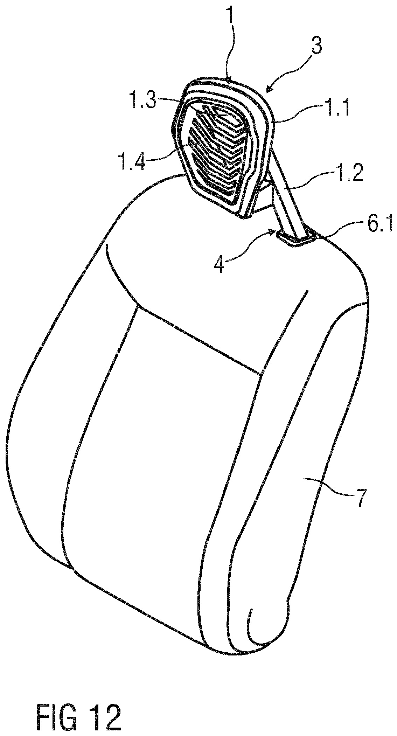

Die Kopfstützenhalterung 1.2 kann dabei derart ausgebildet sein, dass diese trägerlos und somit ohne einen zusätzlichen Träger an einem in Figur 12 dargestellten Strukturelement 7 befestigt und lösbar fixiert werden kann. Eine solche trägerlose und an den Kopfstützenkörper 1 angeformte Kopfstützenhalterung 1.2 weist innere Versteifungselemente, wie Stege 1.2.2 und/oder Rippen (nicht dargestellt) auf.

**Figur 3C** zeigt einen schrägen Schnitt durch die Kopfstützenhalterung 1.2 im Bereich eines strukturseitigen, beispielsweise lehnenseitigen Endes, den Rahmen 1.1, die Auflageelemente 1.4, einen gegenüberliegenden Bereich des Rahmens 1.1 und das körperseitige Ende der Kopfstützenhalterung 1.2.

Wie gezeigt, weist die Kopfstützenhalterung 1.2 im Bereich des strukturseitigen, insbesondere lehnenseitigen Endes im Querschnitt den Hohlraum 1.2.1 ohne Stege 1.2.2 (stegfrei) auf. Je nach Auslegung der Kopfstützenhalterung 1.2 (mit oder ohne Träger) kann diese in Richtung des körperseitigen Endes im Querschnitt einen abnehmenden Umfang aufweisen. Mit anderen Worten: Der Querschnitt des lehnenseitigen Endes ist größer als der Querschnitt des körperseitigen Endes der Kopfstützenhalterung 1.2. Die Kopfstützenhalterung 1.2 ist dabei spiegelsymmetrisch ausgebildet.

Optional kann die Kopfstützenhalterung 1.2 dabei als Aufnahme für einen Träger 2 ausgebildet sein. In dieser Ausführungsform kann die Anzahl der Stege 1.2.2 reduziert sein.

In Figur 3C ist die Auflage eines Kopfes 11 angedeutet. Dabei weist der Rahmen 1.1 am Übergang zu der Auflagefläche 1.3 mit den flexiblen Auflageelementen 1.4 eine Abstützung 12 auf, die in Richtung der Auflagefläche 1.3 weist und flexibel ausgebildet ist. Hierdurch fügt sich der Kopf 11 an und wird seitlich gestützt. Durch die seitliche Abstützung 12 des Kopfes 11 mittels einer Verlängerung am Rahmen 1.1 sind harte Punktauflagen des Kopfes 11 am Kopfstützenkörper 1 vermieden. Die Auflageelemente 1.4 dienen dem Komfort und Design und können frei gestaltet werden. Die Abstützung 12 dient der Vergrößerung der Auflagefläche 1.3 und dem seitlichen Halten des Kopfes 11.

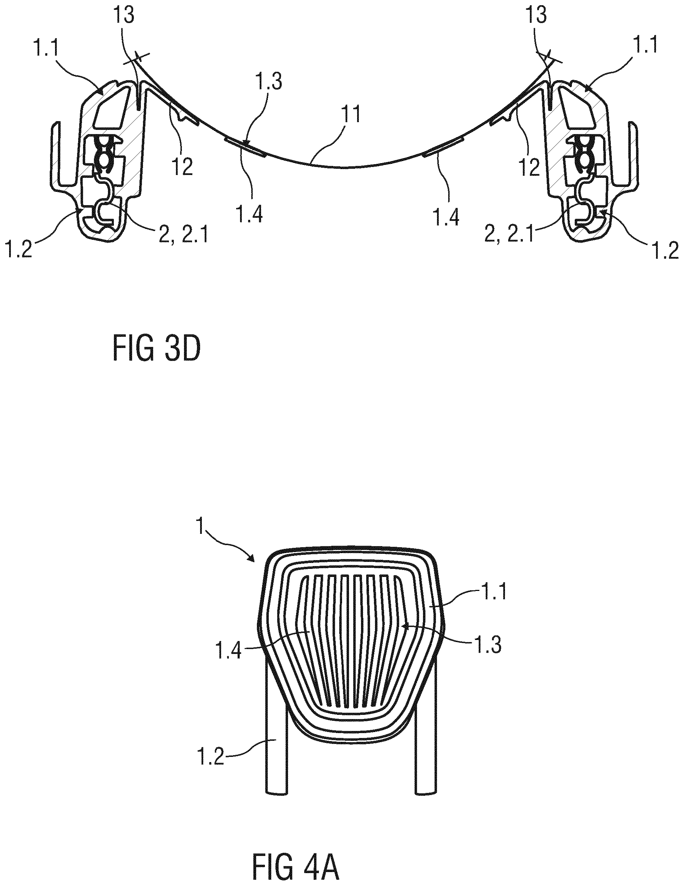

Zusätzlich kann zwischen dem Rahmen 1.1 und der seitlichen in die Auflagefläche 1.3 hineinragenden Abstützung 12 eine Kerbe 13 als Belastungspfad zum Verteilen der Kräfte eingebracht sein, wie in **Figur 3D** gezeigt.

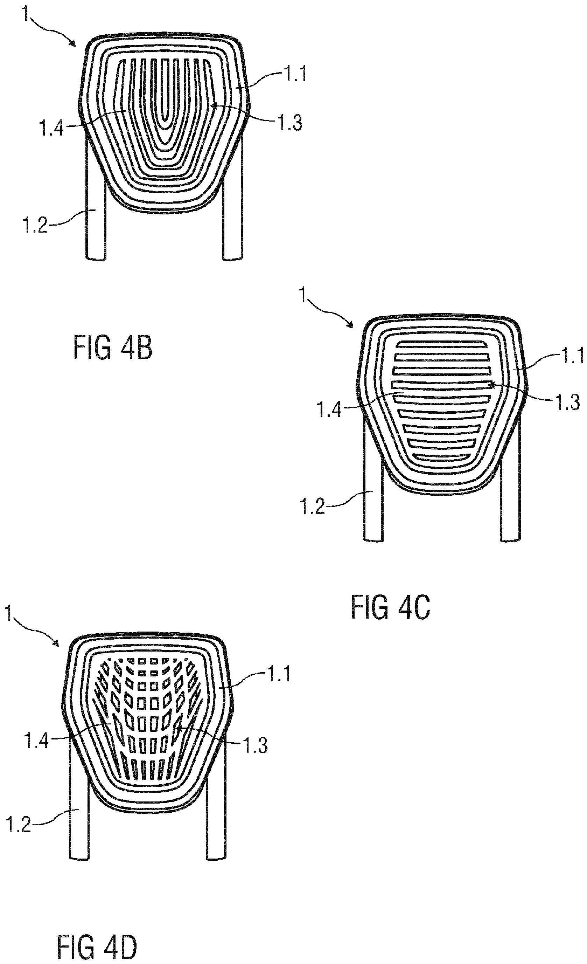

**Figuren 4A bis 4D** zeigen schematisch in Draufsicht verschiedene Ausführungsbeispiele für Kopfstützenkörper 1 mit verschiedenartigen Auflageelementen 1.4 in Form von Längsrippen (Figur 4A), U-förmigen Rippen (Figur 4B), Querrippen (Figur 4C) und einem Netz von Längs- und Querrippen (Figur 4D).

Dabei ist der jeweilige Rahmen 1.1 konkav geformt und kann analog zum Rahmen 1.1 der Figur 1A ausgebildet. Die Profilierung P des Rahmens 1.1 ist umlaufend und weist zumindest abschnittsweise eine Mäander- oder Schlingenform auf. Alternativ kann die Profilierung P eine S-Form aufweisen oder hohlförmig mit Versteifungen oder mit ein oder mehreren Einkerbungen oder Nuten versehen sein. Die inneren rippenförmigen Auflageelemente 1.4 sind derart geformt und angeordnet, dass diese eine ergonomisch ausgestaltete, insbesondere eine konkav geformte Auflagefläche 1.3 für einen anliegenden Kopf bilden.

Hierzu können die Rippen in Quer- und/oder Längsausrichtung geradlinig oder abgewinkelt oder wellenförmig ausgebildet sein. Zusätzlich weisen die Rippen im Querschnitt eine runde oder ovale oder flache Form auf.

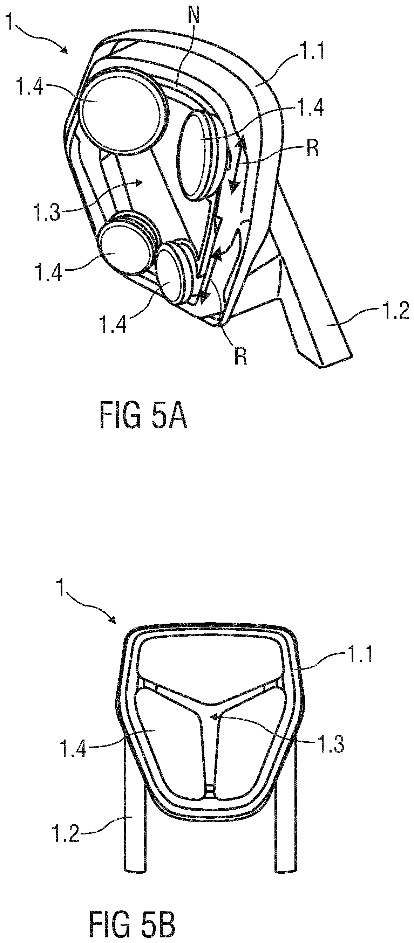

**Figur 5A** zeigt eine weitere alternative Ausführungsform eines mehrteiligen Kopfstützenkörpers 1 mit Auflageelementen 1.4, die als Einzelauflagen ausgebildet sind und flexibel gelagert sind. Dabei erstrecken sich die Auflageelemente 1.4 vom Rahmen 1.1 weg in Richtung Auflagefläche 1.3 und bilden diese. Zur Formung der ergonomischen Auflagefläche 1.3 sind die Einzelauflagen oder Pads flexibel mittels eines Gelenks, beispielsweise eines Kunststoffgelenks, gelagert. Beispielsweise sind die Einzelauflagen an dem Rahmen 1.1 mittels elastisch verformbarer Verbindungen befestigt. Zusätzlich oder alternativ können die Einzelauflagen selbst ergonomisch geformt ausgebildet sein.

Die Einzelauflagen sind beispielsweise als Pads aus einem oder mehreren verschiedenen Materialien ausgebildet. Zusätzlich kann der die Auflagefläche 1.3 bildende Bereich des Pads gepolstert oder mit einem Polster versehen sein. Beispielsweise sind die Auflageelemente 1.4 mehrschichtig ausgeführt und umfassen einen Träger mit darauf angeordnetem Polster als Auflagefläche 1.3. Auch können die padförmigen Auflageelemente 1.4 verstellbar, insbesondere in mindestens einer Nut N verschiebbar gemäß Pfeile R, am Rahmen 1.1 angeordnet sein.

Wie in Figur 5A in der Perspektive ersichtlich, weist der Kopfstützenkörper 1 eine konkave Form auf. Dabei ist zum einen der Rahmen 1.1 konkav geformt. Die Auflageelemente 1.4 sind derart angeordnet oder eingestellt, dass diese eine konkav geformte Auflagefläche 1.3 für einen anliegenden Kopf bilden. Beispielsweise sind die Pads derart nach innen geneigt angeordnet und eingestellt, dass die Auflagefläche 1.3 und damit der Zentralbereich des Kopfstützenkörpers 1 nach innen gewölbt und in Art eines Sattels ausgebildet ist, so dass eine zum am Kopfstützenkörper 1 anliegenden Kopf korrespondierende Form gebildet ist.

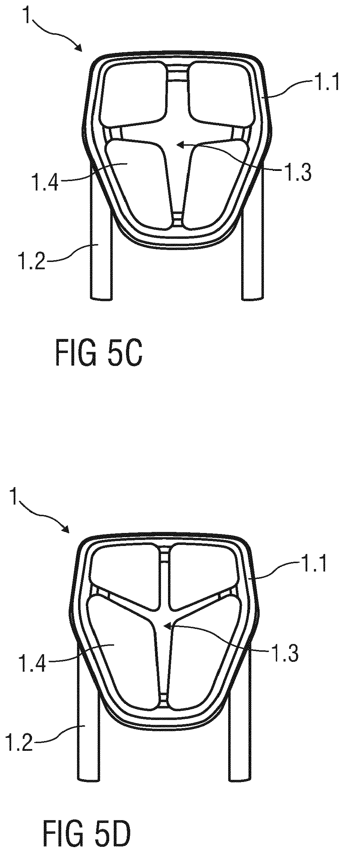

**Figuren 5B bis 5F** zeigen weitere Kopfstützenkörper 1 mit verschiedenartigen padförmigen Auflageelementen 1.4, die sich in Anzahl, Form und/oder Anordnung unterscheiden. So zeigt die Figur 5B einen Kopfstützenkörper 1 mit drei großen Pads als Auflageelemente 1.4. Die Figuren 5C und 5D zeigen jeweils einen Kopfstützenkörper 1 mit vier Auflageelementen 1.4.

Die Auflageelemente 1.4 können, wie in den Figuren 5A bis 5F gezeigt, rund, dreieckig oder viereckig ausgebildet sein. Sie können nach innen gewölbt ausgebildet sein oder eine andere geeignete Oberflächenform aufweisen.

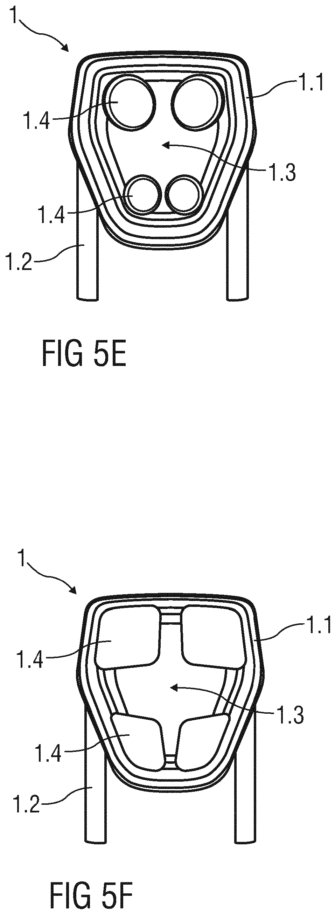

Figuren 5E und 5F zeigen jeweils einen Kopfstützenkörper 1 mit kleineren Pads als Auflageelemente 1.4, die voneinander beabstandet und nach innen in Richtung der Auflagefläche 1.3 geneigt angeordnet sind.

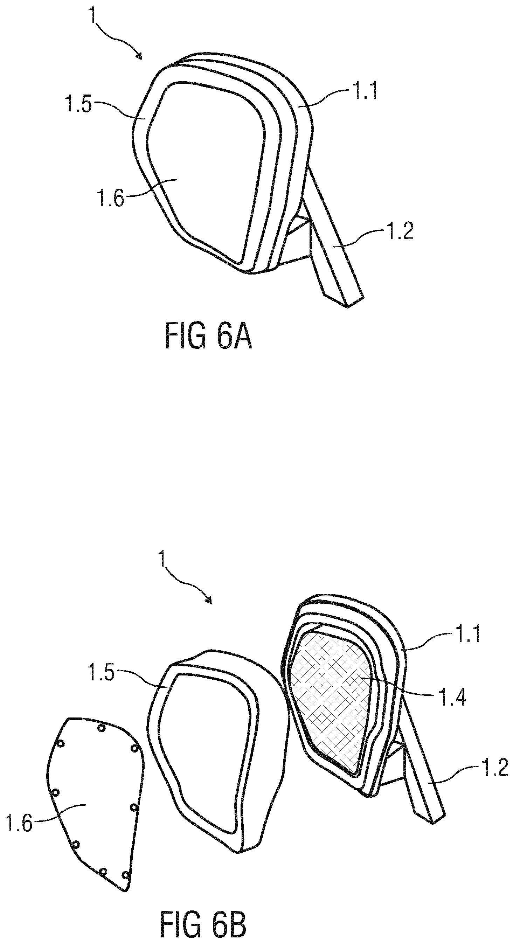

**Figuren 6A und 6B** zeigen schematisch in perspektivischer Ansicht und Explosionsdarstellung ein weiteres Ausführungsbeispiel für einen Kopfstützenkörper 1 mit einem einzelnen Auflageelement 1.4 in Form eines den Innenraum des Rahmens 1.1 ausfüllenden Pads. Als Pad wird hierbei insbesondere eine den Rahmen 1.1 vollständig ausfüllende Wand verstanden. Die Wand ist beispielsweise mit dem Rahmen 1.1 als ein einstückiges, spritzgegossenes Bauteil aus einem schaum losen Werkstoff oder einem Verbundwerkstoff ausgeführt. Der Kopfstützenkörper 1 ist als ein Stück aus Rahmen 1.1, Kopfstützenhalterung 1.2 und dem einen Auflageelement 1.4 gebildet.

Zusätzlich kann auf den Kopfstützenkörper 1 zur Verbesserung des Komforts ein Halterahmen 1.5 lösbar befestigbar, insbesondere steck- und rastbar, sein, auf welchem wiederum ein Bezug 1.6, insbesondere ein Stoffüberzug oder ein Gewebe, lösbar befestigbar ist.

In weiteren Ausführungsformen kann der Kopfstützenkörper 1 mit dem Rahmen 1.1, dem Auflageelement 1.4 und der Kopfstützenhalterung 1.2 aus einem Kunststoffmaterial oder einem Verbundwerkstoff als ein Einzelteil gebildet sein, das mit einem Bezug 1.6 oder einem anderen Weichmaterial bezogen werden kann.

Der zuvor und nachfolgend beschriebene Kopfstützenkörper 1 eignet sich zur Verwendung im Automotivbereich oder im Transportwesen oder im Möbelbereich.

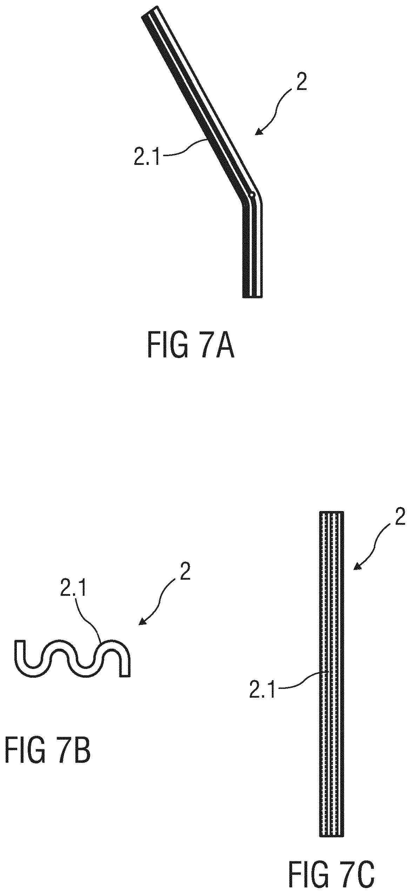

**Figuren 7A bis 7C** zeigen schematisch im Schnitt und Seitenansichten ein Ausführungsbeispiel für eine Kopfstützenhalterung 1.2.

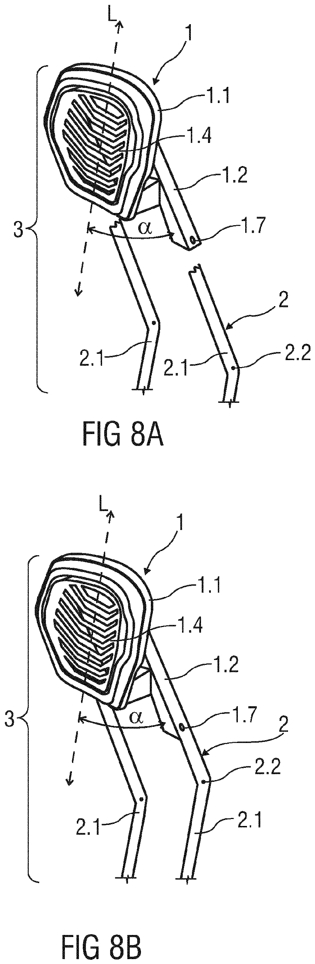

Die Kopfstützenhalterung 1.2 kann wie oben beschrieben einen Träger 2 umfassen. Der Träger 2 kann eine Haltestange 2.1 (wie in Figur 7A gezeigt) oder zwei Haltestangen 2.1 (wie in Figur 8A dargestellt) umfassen.

Der Träger 2 ist profiliert ausgebildet. Der Träger 2 kann in der einteiligen Ausführungsform als eine U-förmige Haltestange ausgebildet sein (nicht näher dargestellt), die im Querschnitt profiliert ist. Alternativ kann der Träger 2 als zwei im Querschnitt profilierten Haltestangen 2.1, die in Längsausrichtung gegebenenfalls abgewinkelt sind, ausgebildet sein.

**Figuren 7A und 7C** zeigen den Träger 2, insbesondere eine der Haltestangen 2.1 in Längsausdehnung. Dabei ist die Haltestange 2.1 in Längsausdehnung zumindest einmal abgewinkelt (Figur 7A).

**Figur 7B** zeigt den Träger 2, insbesondere die Haltestange 2.1 im Querschnitt. In einer möglichen Ausführungsform ist die jeweilige Haltestange 2.1 im Querschnitt S-förmig oder mäander- oder schlingenförmig ausgebildet. Die Haltestange 2.1 ist aus einem rollgeformten Metallprofil gebildet.

**Figur 8A** zeigt schematisch in Explosionsdarstellung ein Ausführungsbeispiel für eine Kopfstütze 3, die aus einem einstückigen, beispielsweise aus Polyurethan hergestellten Kopfstützenkörper 1 und einer Kopfstützenhalterung 1.2 gebildet ist. Die Kopfstützenhalterung 1.2 ist als Aufnahme für den aus zwei Haltestangen 2.1 gebildeten Träger 2 ausgebildet und derart an dem Rahmen 1.1 des Kopfstützenkörpers 1 angeformt, dass diese Kopfstützenhalterung 1.2 in einem vorgegebenen Winkel α zur Längsachse L des Kopfstützenkörpers 1 vom Rahmen 1.1 weg verläuft, so dass die Auflagefläche 1.3 zum struktur-, insbesondere lehnenseitigen Ende der Aufnahmeelemente 1.2 beabstandet ist und im Wesentlichen parallel zur Längsachse L angeordnet ist.

Die Haltestangen 2.1 sind mit einem abgewinkelten Stangenende im Kopfstützenkörper 1 in der Kopfstützenhalterung 1.2 einführbar und dort fixierbar, insbesondere lösbar fixierbar, insbesondere mittels einer Press-Fit- oder Rastverbindung. Hierbei weist die Kopfstützenhalterung 1.2 eine zu der Querschnittsform der Haltestangen 2.1 korrespondierende Querschnittsform auf.

**Figur 8B** zeigt schematisch in Explosionsdarstellung eine alternative Ausführungsform für eine Kopfstütze 3, die aus einem einstückigen, beispielsweise aus Polyurethan hergestellten Kopfstützenkörper 1 besteht. Die angeformte Kopfstützenhalterung 1.2 ist dabei trägerlos ausgebildet. Hierzu kann die Kopfstützenhalterung 1.2 aus einem Verbundwerkstoff, insbesondere einem faserverstärkten Verbundwerkstoff, wie einem glasfaserverstärkten oder kohlenstofffaserverstärkten Kunststoff, gebildet sein. In dieser Ausführungsform bildet die Kopfstützenhalterung 1.2 selbst ein Trägerelement und weist entsprechend eine innere Rippen- oder Stegstruktur aus Stegen 1.2.2 auf.

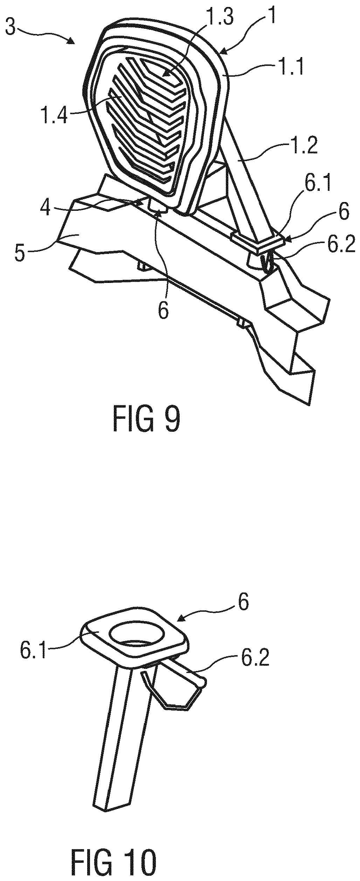

**Figur 9** zeigt schematisch in perspektivischer Ansicht eine an einer Strukturhalterung 4 befestigte Kopfstütze 3. Dabei ist die Kopfstützenhalterung 1.2 mittels einer Stift- oder Bolzenverbindung einfach lösbar befestigbar.

Zur Befestigung des Kopfstützenkörpers 1 mittels der Kopfstützenhalterung 1.2 an der Strukturhalterung 4 weist diese eine in einem Lehnenträger 5 fixierte Halterungen 6 auf, die beispielsweise als insbesondere zylinderförmige Hohlprofile ausgebildet sind und eine zu der Querschnittsform der Haltestangen 2.1 korrespondierende Querschnittsform aufweisen.

In Richtung der Kopfstütze 3 weisen die Halterungen 6 einen vergrößerten Auflageflansch 6.1 auf, an welchem im zusammengebauten Zustand von Kopfstütze 3 und Lehnenträger 5 die Kopfstützenhalterung 1.2 des Kopfstützenkörpers 1 anliegt.

Zur lösbaren Befestigung der Haltestangen 2.1 in den Halterungen 6 weisen die Halterungen 6 und die Haltestangen 2.1 zueinander korrespondierende Verbindungselemente auf. Beispielsweise weisen die Halterungen 6 jeweils ein Befestigungselement 6.2, beispielsweise einen Stift oder Pin, auf. Die Kopfstützenhalterung 1.2 und die in diesen angeordneten Haltestangen 2.1 weisen entsprechend jeweils eine zum Stift oder Pin korrespondierende Ausnehmung 1.7 bzw. 2.2 auf, wie in Figuren 8A und 8B dargestellt.

**Figur 10** zeigt ein Ausführungsbeispiel für eine der Halterungen 6 der Strukturhalterung 4. Die Halterung 6 umfasst am in Richtung Kopfstütze 3 weisenden Ende den Auflageflansch 6.1 und das pin- oder bolzenförmige Befestigungselement 6.2. Das Befestigungselement 6.2 ist dabei mittels einer Verbindung an der Halterung 6 gehalten, so dass das Befestigungselement 6.2 nicht verloren gehen kann. Alternative lösbare Verbindungen, wie Steck- und Rastverbindungen, sind ebenfalls möglich.

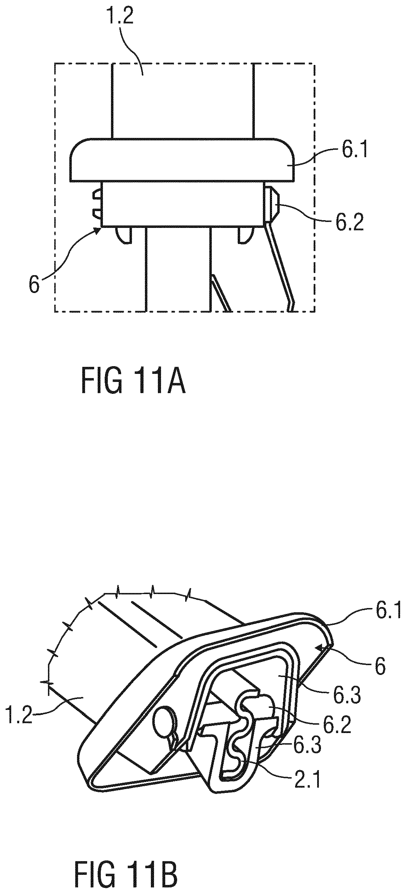

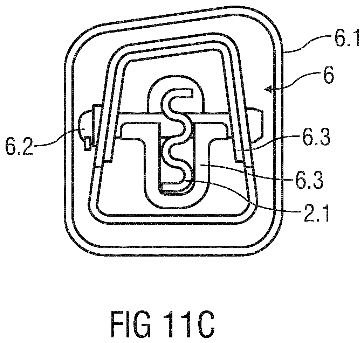

**Figuren 11A bis 11C** zeigen schematisch in Seitenansicht und in Schnittdarstellungen die in der Strukturhalterung 4, insbesondere in einer der Halterungen 6 befestigte Kopfstützenhalterung 1.2, insbesondere deren Träger 2 und dessen Haltestange 2.1. Die jeweilige Halterung 6 kann dabei innenliegend ein u-förmiges Stützelement 6.3 im Bereich der Befestigung umfassen.

**Figur 12** zeigt schematisch in perspektivischer Darstellung als Strukturelement 7 eine Sitzlehne mit einer an dieser angeordneten Kopfstütze 3. Das dem körperseitigen Stangenende der Haltestangen 2.1 gegenüberliegende Stangenende ist in der Strukturhalterung 4 der Sitzlehne lösbar fixiert, wie beispielsweise anhand der Figuren 10 bis 11C näher beschrieben.

Im Detail ist die jeweilige Haltestange 2.1, insbesondere deren kopfstützenseitiges Ende form- und/oder kraftschlüssig, beispielsweise mittels einer Press-Fit- oder Form-Fit-Verbindung, im Kopfstützenkörper 1 und mit dem lehnenseitigen Ende form- und/oder kraftschlüssig, beispielsweise mittels einer Stift- oder Bolzenverbindung, beispielsweise einer Pin-Steck-Verbindung, in der Strukturhalterung 4 lösbar fixiert.

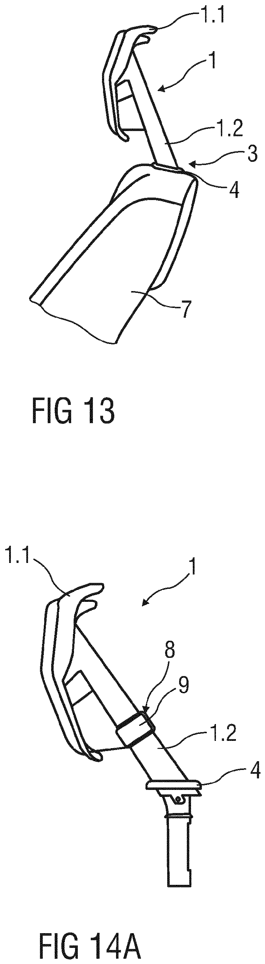

**Figur 13** zeigt die an dem Strukturelement 7, einer Sitzlehne angeordnete Kopfstütze 3 in Seitenansicht. Die Kopfstützenhalterung 1.2 und der Träger 2, insbesondere dessen Haltestangen 2.1 sind dabei mit gleichem Winkel α derart von der Längsachse des Kopfstützenkörpers 1 abgewinkelt, dass die Auflagefläche 1.3 des Kopfstützenkörpers 1 im zusammengebauten Zustand in einer ergonomisch entsprechenden, insbesondere senkrechten Position zu einem Kopf eines Benutzers angeordnet ist.

Darüber hinaus ist der einstückige Kopfstützenkörper 1 im Bereich der Auflagefläche 1.3 konkav (nach innen gewölbt), wobei der Rahmen 1.1, wie in der Seitenansicht zu sehen, im mittleren Bereich abgewinkelt ausgebildet ist.

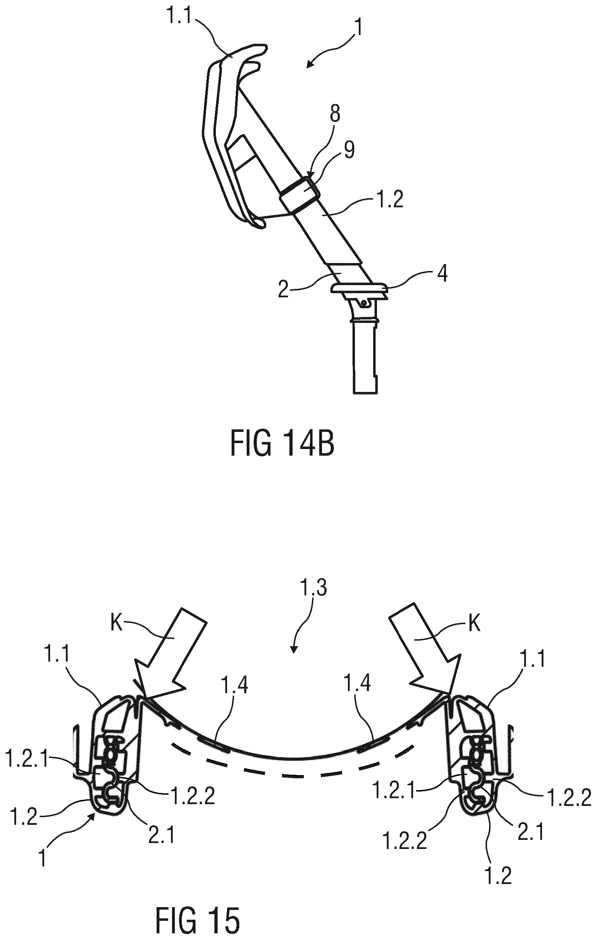

**Figur 14A** und **14B** zeigen schematisch in Seitenansicht ein Ausführungsbeispiel für die Kopfstütze 3 mit einer Höheneinstellvorrichtung 8. Die Höheneinstellvorrichtung 8 ist als ein herkömmlicher Höheneinsteller ausgebildet und beispielsweise in der Kopfstützenhalterung 1.2 in nicht näher dargestellter Art und Weise angeordnet.

Die Kopfstütze 3 ist in den Figuren 14A und 14B in unterschiedlichen Höhen gezeigt. Dabei zeigt die Figur 14A die Kopfstütze 3 in einer eingefahrenen, insbesondere unteren Position und die Figur 14B die Kopfstütze 3 in einer ausgefahrenen, insbesondere oberen Position.

Ein Betätigungsmechanismus 9 der Höheneinstellvorrichtung 8 ist beispielsweise seitlich in die Kopfstützenhalterung 1.2 eingefasst. In einer weiteren, nicht näher dargestellten Ausführungsform ist es möglich, den Betätigungsmechanismus 9 der Höheneinstellvorrichtung 8 an einer anderen Position der Kopfstützenhalterung 1.2 anzubringen.

Durch eine Betätigung des Betätigungsmechanismus 9 wird die Höheneinstellvorrichtung 8 entriegelt. Damit kann die Kopfstütze 3 entlang des Trägers 2 in ihrer Position verstellt werden. Nach Beendigung der Verstellung wird die Höheneinstellvorrichtung 8 verriegelt und damit die Kopfstütze 3 in der eingestellten Position fixiert.

**Figur 15** zeigt schematisch eine Schnittdarstellung durch den Kopfstützenkörper 1 im Detail. Die Lastpfeile K zeigen die Lastpfade, die auf den Rahmen 1.1 und nicht auf die Auflagefläche 1.3 wirken.

### Bezugszeichenliste

- 1: Kopfstützenkörper
- 1.1: Rahmen
- 1.2: Kopfstützenhalterung
- 1.2.1: Hohlraum
- 1.2.2: Steg
- 1.3: Auflagefläche
- 1.4: Auflageelement
- 1.5: Halterahmen
- 1.6: Bezug
- 1.7: Ausnehmung
- 2: Träger
- 2.1: Haltestange
- 2.2: Ausnehmung
- 3: Kopfstütze
- 4: Strukturhalterung
- 5: Lehnenträger
- 6: Halterungen
- 6.1: Auflageflansch
- 6.2: Befestigungselement
- 6.3: Stützelement
- 7: Strukturelement
- 8: Höheneinstellvorrichtung
- 9: Betätigungsmechanismus
- 10: Polsterung
- 11: Kopf
- 12: Abstützung
- 13: Kerbe

- A-A: Schnitt
- D-D: Schnitt

- K: Lastpfeil
- L: Längsachse
- N: Nut
- P: Profilierung
- R: Pfeile

- X: X-Richtung
- Y: Y-Richtung
- Z: Z-Richtung

- α: Winkel

## Patentansprüche

1. Kopfstützenkörper (1) für eine Kopfstütze (3),
ausgebildet als mindestens ein Rahmen (1.1) mit einem oder mehreren innen liegenden, eine Auflagefläche (1.3) bildenden flexiblen Auflageelementen (1.4) und einer vom Rahmen (1.1) abragenden Kopfstützenhalterung (1.2),
wobei der Kopfstützenkörper (1) einteilig aus dem Rahmen (1.1), den Auflageelementen (1.4) und der Kopfstützenhalterung (1.2) durch Urformen aus einem Kunststoffmaterial oder einem Verbundwerkstoff gebildet ist.

2. Kopfstützenkörper (1) nach Anspruch 1, wobei das oder die Auflageelement/e (1.4) eine ergonomisch ausgestaltete Auflagefläche (1.3), insbesondere eine konkav geformte Auflagefläche (1.3) bildet/n.

3. Kopfstützenkörper (1) nach Anspruch 2, wobei die Auflagefläche (1.3) derart ergonomisch ausgestaltet ist, dass eine gegenüber herkömmlichen Kopfstützenkörpern größere Auflagefläche (1.3) gegeben ist.

4. Kopfstützenkörper (1) nach einem der Ansprüche 1 bis 3, wobei das oder die Auflageelemente (1.4) polsterfrei ausgebildet sind.

5. Kopfstützenkörper (1) nach einem der Ansprüche 1 bis 4, der mit einer Polsterung (10) mit einer Dicke von kleiner 20 mm versehen ist.

6. Kopfstützenkörper (1) nach einem der Ansprüche 1 bis 5, wobei die Auflageelemente (1.4) als Rippen ausgebildet sind.

7. Kopfstützenkörper (1) nach einem der Ansprüche 1 bis 5, wobei das oder die Auflageelemente (1.4) als Einzelauflage/n ausgebildet ist/sind, das/die flexibel gelagert ist/sind.

8. Kopfstützenkörper (1) nach einem der vorhergehenden Ansprüche, wobei der Rahmen (1.1) im Querschnitt eine Profilierung (P) aufweist.

9. Kopfstützenkörper (1) nach einem der vorhergehenden Ansprüche, wobei die Kopfstützenhalterung (1.2) mindestens einen Träger (2) umfasst, der im Querschnitt profiliert ist.

10. Kopfstützenkörper (1) nach Anspruch 9, wobei der zumindest eine Träger (2) im Querschnitt schlingenförmig oder mäanderförmig ausgebildet ist.

11. Kopfstütze (3), umfassend
- einen Kopfstützenkörper (1) nach einem der Ansprüche 1 bis 10.

12. Kopfstütze (3) nach Anspruch 11,
wobei die Kopfstützenhalterung (1.2) mit einem Träger (2) lösbar verbunden ist.

13. Kopfstütze (3) nach Anspruch 11,
wobei die Kopfstützenhalterung (1.2) mit einem Strukturelement (7) lösbar verbunden ist.

## Claims

1. Headrest body (1) for a headrest (3),
configured as at least one frame (1.1) having one or a plurality of inner flexible support elements (1.4) forming a support surface (1.3), and a headrest holder (1.2) protruding from the frame (1.1),
wherein the headrest body (1), composed of the frame (1.1), the support elements (1.4) and the headrest holder (1.2), by shaping is formed integrally from a plastics material or a composite material.

2. Headrest body (1) according to Claim 1, wherein the support element or the support elements (1.4) forms/form an ergonomically designed support surface (1.3), in particular a concavely shaped support surface (1.3).

3. Headrest body (1) according to Claim 2, wherein the support surface (1.3) is ergonomically designed in such a manner that a larger support surface (1.3) is provided in comparison to conventional headrest bodies.

4. Headrest body (1) according to one of Claims 1 to 3, wherein the support element or the support elements (1.4) are configured so as to be cushion-free.

5. Headrest body (1) according to one of Claims 1 to 4, said headrest body (1) being provided with a padding (10) of less than 20 mm in terms of thickness.

6. Headrest body (1) according to one of Claims 1 to 5, wherein the support elements (1.4) are configured as ribs.

7. Headrest body (1) according to one of Claims 1 to 5, wherein the support element or the support elements (1.4) is/are configured as (an) individual support(s) which is/are flexibly mounted.

8. Headrest body (1) according to one of the preceding claims, wherein the frame (1.1) in the cross section has a profiling (P).

9. Headrest body (1) according to one of the preceding claims, wherein the headrest holder (1.2) comprises at least one carrier (2) which is profiled in the cross section.

10. Headrest body (1) according to Claim 9, wherein the at least one carrier (2) in the cross section is configured so as to be loop-shaped or meandering.

11. Headrest (3) comprising
- a headrest body (1) according to one of Claims 1 to 10.

12. Headrest (3) according to Claim 11,
wherein the headrest holder (1.2) is releasably connected to a carrier (2).

13. Headrest (3) according to Claim 11,
wherein the headrest holder (1.2) is releasably connected to a structural element (7).

## Revendications

1. Corps d'appuie-tête (1) pour un appui-tête (3), réalisé sous la forme d'au moins un cadre (1.1) comprenant un ou plusieurs éléments d'appui flexibles (1.4) situés à l'intérieur, formant une surface d'appui (1.3), et une fixation d'appuie-tête (1.5) dépassant du cadre (1.1),
le corps d'appuie-tête (1) étant formé d'une seule pièce à partir du cadre (1.1), des éléments d'appui (1.4) et de la fixation d'appuie-tête (1.2) par première transformation à partir d'une matière plastique ou d'un matériau composite.

2. Corps d'appuie-tête (1) selon la revendication 1, dans lequel le ou les éléments d'appui (1.4) forment une surface d'appui (1.3) configurée ergonomiquement, notamment une surface d'appui (1.3) de forme concave.

3. Corps d'appuie-tête (1) selon la revendication 2, dans lequel la surface d'appui (1.3) est configurée ergonomiquement, de manière à obtenir une surface d'appui (1.3) plus grande que celle des corps d'appuie-tête conventionnels.

4. Corps d'appuie-tête (1) selon l'une quelconque des revendications 1 à 3, dans lequel le ou les éléments d'appui (1.4) sont réalisés sans rembourrage.

5. Corps d'appui-tête (1) selon l'une quelconque des revendications 1 à 4, qui est pourvu d'un rembourrage (10) d'une épaisseur inférieure à 20 mm.

6. Corps d'appuie-tête (1) selon l'une quelconque des revendications 1 à 5, dans lequel les éléments d'appui (1.4) sont réalisés sous forme de nervures.

7. Corps d'appuie-tête (1) selon l'une quelconque des revendications 1 à 5, dans lequel le ou les éléments d'appui (1.4) sont réalisés sous forme d'appui(s) individuel(s) qui est/sont monté(s) de manière flexible.

8. Corps d'appuie-tête (1) selon l'une quelconque des revendications précédentes, dans lequel le cadre (1.1) présente un profilage (P) dans la section transversale.

9. Corps d'appuie-tête (1) selon l'une quelconque des revendications précédentes, dans lequel la fixation d'appuie-tête (1.2) comprend au moins un support (2) qui est profilé dans la section transversale.

10. Corps d'appuie-tête (1) selon la revendication 9, dans lequel l'au moins un support (2) est réalisé en forme de boucle ou en forme de méandre dans la section transversale.

11. Appuie-tête (3), comprenant :
- un corps d'appuie-tête (1) selon l'une quelconque des revendications 1 à 10.

12. Appuie-tête (3) selon la revendication 11, dans lequel la fixation d'appuie-tête (1.2) est reliée de façon amovible à un support (2).

13. Appui-tête (3) selon la revendication 11, dans lequel la fixation d'appui-tête (1.2) est reliée de manière amovible à un élément structural (7).
